(19) **Europäisches Patentamt**
**European Patent Office**
**Office européen des brevets**

(11) **EP 4 507 083 A1**

(12) **EUROPEAN PATENT APPLICATION**
published in accordance with Art. 153(4) EPC

(43) Date of publication:
**12.02.2025 Bulletin 2025/07**

(51) International Patent Classification (IPC):
**H01M 50/172** (2021.01)    **H01M 50/502** (2021.01)

(21) Application number: **22951547.3**

(52) Cooperative Patent Classification (CPC):
**H01M 50/172; H01M 50/502; Y02E 60/10**

(22) Date of filing: **21.07.2022**

(86) International application number:
**PCT/CN2022/107122**

(87) International publication number:
**WO 2024/016272 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Jiaocheng District
Ningde
Fujian 352100 (CN)**

(72) Inventors:
• **LEI, Yuyong**
  **Ningde, Fujian 352100 (CN)**
• **GUO, Zhijun**
  **Ningde, Fujian 352100 (CN)**
• **WANG, Peng**
  **Ningde, Fujian 352100 (CN)**

(74) Representative: **Rowlands, Stuart Michael et al
Maucher Jenkins
Seventh Floor Offices
Artillery House
11-19 Artillery Row
London SW1P 1RT (GB)**

(54) **BATTERY CELL AND MANUFACTURING METHOD THEREFOR, AND BATTERY AND ELECTRIC DEVICE**

(57) Provided in the embodiments of the present application are a battery cell and a manufacturing method therefor, and a battery and an electric device. The battery cell comprises a shell, a first end cap assembly, a second end cap assembly and an electrode assembly, wherein an opening is provided at each of two opposite ends of the shell; the first end cap assembly and the second end cap assembly are used for covering the two openings of the shell, respectively; the electrode assembly comprises a body part, a first tab and a second tab; the first tab extends from a first end face of the body part facing the first end cap assembly, and is used for connecting to the first end cap assembly; the second tab extends from a second end face of the body part facing the second end cap assembly, and is used for connecting to the second end cap assembly; and the length of the first tab protruding from the first end face is L1, the length of the second tab protruding from the second end face is L2, and L2 is less than L1. In the embodiments of the present application, the size of the first tab and the size of the second tab are designed differentially, such that on the premise of satisfying assembly requirements, the risk of the second tab inserting into the body part is reduced, thereby improving safety levels.

FIG. 3

## Description

### TECHNICAL FIELD

The present disclosure relates to the technical filed of batteries, and particularly, to a battery cell and manufacturing method therefor, a battery and an electrical device.

### BACKGROUND

Battery cells are widely used in electronic devices, such as mobile phones, laptops, battery cars, electric cars, electric planes, electric ships, electric toy cars, electric toy ships, electric toy planes, power tools, and the like.

One research direction in battery technology is how to improve safety of the battery cells.

### SUMMARY

The present disclosure provides a battery cell and manufacturing method therefor, a battery and an electrical device, which can improve safety.

In a first aspect, embodiments of the present disclosure provide a battery cell including a housing, a first end cover assembly, a second end cover assembly and an electrode assembly. Openings are provided on two ends of the housing opposite to each other. The first end cover assembly and the second end cover assembly are configured to cover two openings of the housing, respectively. The electrode assembly includes a body part, a first tab and a second tab. The first tab extends from a first end face of the body part facing the first end cover assembly and is configured to be connected with the first end cover assembly. The second tab extends from a second end face of the body part facing the second end cover assembly and is configured to be connected with the second end cover assembly. A protruding length of the first tab from the first end face is defined as $L_1$, a protruding length of the second tab from the second end face is defined as $L_2$, and $L_2$ is less than $L_1$.

In the above technical solution, the second tab has a smaller length than the first tab, so a redundancy of the second tab can be reduced, a risk of the second tab being inserted into the body part when the battery cell is subjected to external impact is reduced, a hidden danger of short circuit is reduced, and safety is improved. The first tab has a larger protruding length than the second tab, so a difficulty of connecting the first tab and the first end cover assembly can be reduced, and an assembly process is simplified. In the above technical solution, the length of the first tab and the length of the second tab are designed differently, to reduce a risk of the second tab being inserted into the body part and improve the safety under a premise of meeting requirements for assembly.

In some embodiments, the first end cover assembly includes a first electrode leading-out member,

and the second end cover assembly includes a second electrode leading-out member. The first tab is configured to be electrically connected with the first electrode leading-out member, and the second tab is configured to be electrically connected with the second electrode leading-out member. The first electrode leading-out member can connect the first tab to an external circuit, and the second electrode leading-out member can connect the second tab to an external circuit, to charge and discharge the electrode assembly.

In some embodiments, the battery cell further includes an isolation member, and at least part of the isolation member is located between the first end cover assembly and the first end face. The isolation member is provided with a channel, and the first tab passes through the channel to be electrically connected with the first electrode leading-out member.

In the above technical solution, the isolation member can insulate and isolate at least part of the first tab passing through the channel from the first end face of the body part, to reduce the risk of the first tab being inserted into the body part when the battery cell is subjected to external impact, thereby reducing the hidden danger of short circuits and improving safety. The second tab has a smaller protruding length than the first tab and thus cannot be easily inserted into the body part. Therefore, in the technical solution, there is no need to provide another isolation member between the second end cover assembly and the second end face, which can save space and improve an energy density of the battery cell.

In some embodiments, the first tab includes a plurality of first tab layers stacked in a part of the channel. A dimension of the channel along its own width direction is defined as W, a total thickness of the plurality of first tab layers is defined as $T_0$, and W and $T_0$ meet:

$$0.5\mathrm{mm}\leqslant \mathrm{W\text{-}T_0}\leqslant 4\mathrm{mm}.$$

In the above technical solution, the value of $W\text{-}T_0$ is set to range from 0.5 mm to 4 mm, to ensure that the plurality of first tab layers are not clamped in the channel. Thus the plurality of first tab layers can be bound to a certain extent such that deformation of the first tab layers is reduced, while a friction between the first ear layers and a wall of the channel is reduced to reduce a risk of friction and wear of the first tab layers.

In some embodiments, the maximum dimension of the isolation member along a thickness direction of the first end cover assembly is defined as $L_3$. $L_1$, $L_2$, and $L_3$ meet: $L_1\text{-}L_2 \geq 0.8 \cdot L_3$.

The second tab can be directly connected with the second electrode leading-out member, and has a less protruding length than the first tab. The first tab needs to pass through the channel at first, and then is connected with the first electrode leading-out member. When the first electrode leading-out member and the first tab are assembled, a distance between the first electrode leading-out member and the first end face is limited by the isolation member. In the above technical solution, $L_1$, $L_2$, and $L_3$ meet: $L_1-L_2 \geq 0.8 \cdot L_3$, to ensure a protruding dimension of the first tab from the isolation member, so the connection area between the first electrode leading-out member and the first tab meets the requirements.

In some embodiments, $L_1$, $L_2$ and $L_3$ meet: $L_1-L_2 \geq L_3$.

In the above technical solution, the first tab can protrude from the isolation member by a sufficient distance, to reduce a difference between a connection area between the first electrode leading-out member and the first tab and a connection area between the second electrode leading-out member and the second tab, so uniformity in current carrying between the first tab and the second tab is improved.

In some embodiments, the first end cover assembly further includes a first end cover and a first insulator, the first end cover is configured to be connected to the housing, the first insulator is arranged on a side of the first end cover facing the body part, and the first electrode leading-out member is arranged on the first end cover. In a thickness direction of the first end cover assembly, at least part of the isolation member is located between the first end face and the first insulator.

In the above technical solution, the first insulator can insulate and isolate the first end cover and the electrode assembly, to reduce a risk of short circuit. The first insulator and the first end face can limit the isolation member from two sides, to reduce a shaking amplitude of the isolation member when the battery cell is subjected to external impact.

In some embodiments, a side of the isolation member away from the first end face is provided with an accommodation recess, the channel passes through a bottom wall of the accommodation recess, and a part of the first tab passing through the channel is accommodated in the accommodation recess. At least part of the first insulator is accommodated in the accommodation recess.

In the above technical solution, the part of the first insulator accommodated in the accommodation recess can limit the isolation member, to limit a movement of the isolation member in a direction perpendicular to the thickness direction of the first end cover assembly. The bottom wall of the accommodation recess can isolate a part of the first tab from the first end face, to reduce a risk of the first tab being inserted into the body part.

The part of the first tab accommodated in the accommodation recess is bent and arranged between the first electrode leading-out member and the bottom wall of the accommodation recess. The first tab includes M first tab layers stacked with each other, M is defined as a positive integer greater than 1, and a thickness of each first tab layer is defined as $T_1$. Along the thickness direction of the first end cover assembly, the minimum distance between the first electrode leading-out member and the bottom wall of the accommodation recess is defined as $h_1$, and $h_1 > 2M \cdot T_1$.

The above technical solution defines $h_1 > 2M \cdot T_1$ to provide space for a bending of the first tab along the thickness direction of the first end cover assembly, so a risk of the first tab being inserted into the body part is reduced and a safety is improved.

In some embodiments, the first insulator is pressed against the first end face through the isolation member.

The first insulator limits a movement of the body part through the isolation member, to reduce a shaking amplitude of the body part along the thickness direction of the first end cover assembly when the battery cell is subjected to external impact, so a shedding of active substances is reduced and a safety is improved.

In some embodiments, the isolation member includes a first isolator and a second isolator connected to the first isolator, and the channel is formed between the first isolator and the second isolator.

In the above technical solution, both the first isolator and the second isolator can limit the first tab, to reduce a shaking and deformation of the first tab when the battery cell is subjected to external impact. The first isolator and the second isolator are separately formed and connected, to provide a more flexible assembly method for the isolation member and the electrode assembly.

In some embodiments, the second end cover assembly further includes a second end cover and a second insulator, the second end cover is connected to the housing, and the second electrode leading-out member is arranged on the second end cover. The second insulator is arranged on a side of the second end cover facing the body part, and the second insulator is directly pressed against the second end face.

In the above technical solution, the second insulator can insulate and isolate the second end cover from the electrode assembly, to reduce a risk of short circuit. The second insulator can limit a movement of the body part along the thickness direction of the second end cover assembly, to reduce a shaking amplitude of the body part along the thickness direction of the second end cover assembly when the battery cell is subjected to external impact, so a shedding of active substances is reduced and a safety is improved.

In some embodiments, the second tab is bent and arranged between the second electrode leading-out member and the second end face. The second tab includes N second tab layers stacked with each other, N is defined as a positive integer greater than 1, and a thickness of each second tab layer is defined as $T_2$. Along the thickness direction of the second end cover assembly, the minimum distance between the second electrode leading-out member and the second end face is defined as h, and $h > 2N \cdot T_2$.

The above technical solution can provide space for a bending of the second tab along the thickness direction of the second end cover assembly, so a risk of the second tab being inserted into the body part is reduced and a safety is improved.

In some embodiments, a melting point of the first tab is lower than that of the second tab.

In the above technical solution, compared with the second tab, the first tab has a longer path for current flow, so the heat generated by the first tab is more, and the melting point of the first tab is lower. Therefore, when the battery cell is short-circuiting, the first tab is more likely to fuse, and the circuit is cut off in time and the safety risk is reduced.

In some embodiments, the first tab is configured as a positive tab and the second tab is configured as a negative tab.

In a second aspect, embodiments of the present disclosure provide a battery including a plurality of battery cells of any of embodiments in the first aspect.

In a third aspect, embodiments of the present disclosure provide an electrical device including a battery of any of embodiments in the second aspect configured to supply electrical energy.

In a fourth aspect, embodiments of the present disclosure provide a manufacturing method for a battery cell, including providing an electrode assembly, wherein the electrode assembly includes a body part, a first tab and a second tab, the first tab and the second tab respectively extend from a first end face and a second end face of the body part, a protruding length of the first tab from the first end face is defined as $L_1$, a protruding length of the second tab from the second end face is defined as $L_2$, and $L_2$ is less than $L_1$; providing a first end cover assembly; providing a second end cover assembly; providing a housing with openings provided on two ends of the housing opposite to each other; and assembling the electrode assembly, the first end cover assembly, the second end cover assembly and the housing. The first end cover assembly and the second end cover assembly respectively cover and enclose two openings of the housing, the first end face faces the first end cover assembly, the second end face faces the second end cover assembly, the first tab is configured to be connected with the first end cover assembly, and the second tab is configured to be connected with the second end cover assembly.

In some embodiments, steps of assembling the electrode assembly, the first end cover assembly, the second end cover assembly and the housing includes a step S11 of connecting the second tab and the second end cover assembly; a step S12 of inserting the electrode assembly into the housing through one opening of the housing for the first tab to protrude through the other opening of the housing; a step S13 of connecting the second end cover assembly and the housing to cover the one opening through the second end cover assembly; a step S14 of connecting the first tab and the first end cover assembly; and a step S15 of connecting the first end cover assembly and the housing to cover the other opening through the first end cover assembly. Step S11 to step S15 are performed in sequence.

In the above technical solution, the step S11 is performed before the step S12, thus a connection process of the second tab and the second end cover assembly will not be interfered by the housing, so the requirement on the length $L_2$ of the second tab can be reduced and the redundancy of the second tab is reduced, thereby reducing the risk of the second tab being inserted into the body part when the battery cell is subjected to external impact, reducing the risk of short circuit and improving safety. The step S14 needs to be performed after the step S13, and the connection process of the first tab and the first end cover assembly will be limited by the housing. In embodiments of the present disclosure, the first tab has the length $L_1$ which is relatively long and can protrude from the housing to be connected with the first end cover assembly, thereby reducing the difficulty of connecting the first tab and the first end cover assembly and simplifying the assembly process.

In some embodiments, steps of assembling the electrode assembly, the first end cover assembly, the second end cover assembly and the housing includes a step S21 of placing the electrode assembly into the housing for the first tab and the second tab to protrude through two openings of the housing respectively; a step S22 of connecting the second tab and the second end cover assembly; a step S23 of connecting the second end cover assembly and the housing to cover one opening of the housing through the second end cover assembly; a step S24 of connecting the first tab and the first end cover assembly; and a step S25 of connecting the first end cover assembly and the housing to cover the other opening of the housing through the first end cover assembly. The step S21 to step S25 are performed in sequence.

## BRIEF DESCRIPTION OF THE DRAWINGS

In order to more clearly explain technical solutions of embodiments of the present disclosure, a brief introduction of drawings required to be used in the embodiments of the present disclosure will be introduced below. It will be apparent that the drawings described below are only some embodiments of the present disclosure. For those skilled in the art, without creative work, other drawings can also be obtained according to the drawings.

FIG. 1 is a structural diagram of a vehicle provided by some embodiments of the present disclosure;
FIG. 2 is an exploded diagram of a battery provided by some embodiments of the present disclosure;
FIG. 3 is an explosion diagram of a battery cell provided by some embodiments of the present disclosure;
FIG. 4 is a structural diagram of an electrode assembly of a battery cell provided by some embodiments of the present disclosure;
FIG. 5 is a sectional diagram of a battery cell provided by some embodiments of the present disclosure;

FIG. 6 is an enlarged diagram of a part in a circle A of the battery cell as shown in FIG. 5;

FIG. 7 is an enlarged diagram of a part in a circle B of the battery cell as shown in FIG. 5;

FIG. 8 is a structural diagram of an isolation member shown in FIG. 3;

FIG. 9 is a flowchart of a manufacturing method for a battery cell provided by some embodiments of the present disclosure;

FIG. 10 and FIG. 11 are diagrams of a battery cell during a manufacturing process provided by some embodiments of the present disclosure.

In the drawings, figures are not drawn to an actual scale.

## DETAILED DESCRIPTION

In order to make purposes, technical solutions and advantages of embodiments of the present disclosure more clear, the technical solutions in embodiments of the present disclosure will be described clearly and completely in combination with drawings attached to embodiments of the present disclosure. It will be apparent that embodiments described are part, and not all of embodiments of the present disclosure. Based on embodiments in the present disclosure, all other embodiments obtained by those skilled in the field without creative work shall fall within the scope of protection in the present disclosure.

Unless otherwise defined, all technical and scientific terms used in the present disclosure have the same meaning as those normally understood by skilled in the art. In the present disclosure, terms used in the description of the present disclosure are for purposes of describing specific embodiments only and are not intended to restrict the present disclosure Terms "including" and "having" and any variation thereof in the description, claims and the above drawings of the present disclosure are intended to cover non-exclusive inclusion. Terms "first", "second", etc. in the description and claims or in the above drawings of the present disclosure are used to distinguish between different objects and are not used to describe a particular order or primary or secondary relationship.

Reference to "embodiments" in the present disclosure means that a particular feature, structure or characteristic described in conjunction with embodiments may be included in at least one embodiment of the present disclosure. The presence of the phrase at various points in the specification does not necessarily refer to the same embodiment, nor is it a separate or alternative embodiment that is mutually exclusive with other embodiments.

In the description of the present disclosure, it should be noted that, unless otherwise stated or defined, terms "installation", "connected to", "connected with", "attachment" and the like are to be understood broadly, and may be, for example, a fixed connection, a detachable connection, or an integral connection; they can be connected directly or indirectly through an intermediate medium or an internal communication between two elements. The specific meaning of the above terms in the present disclosure can be understood by those skilled in the art according to actual circumstance.

The term "and/or" in the present disclosure is only an association relationship describing associated objects, indicating that there can be three kinds of relationships, for example, A and/or B, can mean: there is A alone, there is A and B simultaneously, and there is B alone. In addition, the character "/" in the present disclosure generally indicates that the associated objects are in an "or" relationship.

In embodiments of the present disclosure, the same reference sign represents the same parts, and for brevity, a detailed description of the same part is omitted in different embodiments. It is understood that the thickness, length, width, etc. of various components in embodiments of the present disclosure as illustrated and the overall thickness, length, width, etc. of an integrated device are illustrative only and should not constitute any limitation to the present disclosure.

The term "a plurality of" as used in the present disclosure means more than two (including two).

The term "parallel" in the present disclosure includes not only the case of absolute parallelism, but also the case of approximate parallelism in the conventional understanding of engineering. At the same time, the term "perpendicular" also includes not only the absolute perpendicular situation, but also the general understanding of the approximately perpendicular situation in the conventional understanding of engineering.

In the present disclosure, a battery cell may include a lithium-ion battery cell, a lithium-sulfur battery cell, a sodium lithium ion battery cell, a sodium ion battery cell or a magnesium ion battery cell, etc. Embodiments of the present disclosure are not limited thereto.

The battery referred to in embodiments of the present disclosure is a single physical module including multiple battery cells to provide higher voltage and capacity. The battery may generally include a box for encapsulating one or more battery cells. The box can prevent liquids or other foreign objects from affecting charging or discharging of the battery cell.

The battery cell includes an electrode assembly and an electrolyte. The electrode assembly includes a positive electrode sheet, a negative electrode sheet and a separator. The battery cell works mainly by moving metal ions between the positive electrode sheet and the negative electrode sheet. The positive electrode sheet includes a positive current collector and a positive active substance layer which is applied on the surface of the positive current collector. The positive current collector fluid includes a positive current collector part and a positive tab. The positive current collector part is coated with the positive active substance layer, and the positive tab is not coated with the positive active substance layer. Taking the lithium-ion battery as an example, the material of the positive current collector can be aluminum, the positive active substance layer includes the positive active material, which can be lithium cobaltate, lithium iron phosphate, lithium ternary or lithium manganate, etc. The negative electrode sheet includes a negative current collector and a negative active substance layer which is applied on the surface of the negative current collector. The negative current collector includes a negative current collector part and a negative tab. The negative current collector part is coated with the negative active substance layer, and the negative tab is not coated with the negative active substance layer. The material of the negative current collector can be copper, and the negative active substance layer includes the negative active material which may be carbon or silicon. The material of a separator can be polypropylene (PP) or PE (polyethylene).

The electrode assembly includes a body part and a first tab and a second tab both extending from the body part. The body part is an electricity generation part of the electrode assembly, and the active substance inside is used for electrochemical reaction with the electrolyte, etc., to cause charge and discharge processes. Polarities of the first tab and the second tab are opposite, and the first tab and the second tab are used for external electrical connection to achieve charge and discharge of the electrode assembly.

The battery cell also includes an enclosure that encloses the electrode assembly and the electrolyte. In the related technology, the enclosure includes a housing, a first end cover assembly and a second end cover assembly. Two opposite ends of the housing are provided with openings. The first end cover assembly and the second end cover assembly are used to cover the two openings of the housing, respectively.

The first tab and the second tab are connected to the first end cover assembly and the second end cover assembly, respectively. The first end cover assembly and the second end cover assembly can be used to connect the first tab and the second tab to external circuits for charging and discharging of the electrode assembly, respectively.

The first tab and the second tab of the electrode assembly are usually of equal length. In order to facilitate the connection of the first tab to the first end cover assembly and the connection of the second tab to the second end cover assembly, each of the first tab and the second tab usually has a relatively large length. When the first end cover assembly and the second end cover assembly are connected to the housing, the first tab and the second tab may have redundant parts. When the battery cell is subjected to external impact, the redundant part of the first tab and the redundant part of the second tab may be inserted into the body part, resulting in the risk of a direct connection between the positive and negative electrodes, and thereby resulting in a safety risk.

The inventors attempted to reduce lengths of both the first tab and the second tab simultaneously, to reduce redundancy of both the first tab and the second tab and reduce the risk of the tabs being inserted into the body part. However, the inventors found that when the lengths of both the first tab and the second tab are reduced at the same time, the difficulty of connecting the first tab and the first end cover assembly and the difficulty of connecting the second tab and the second end cover assembly will be increased, resulting in assembly difficulties, which affect a production efficiency and yield of the battery cell.

In view of this, embodiments of the present disclosure provide a technical solution that the length of the first tab and the length of the second pole tab are differently designed in order to reduce a risk of the tab being inserted into the body part and improve safety while meeting the assembly requirements.

The technical solution described in the embodiments of the present disclosure is applicable to electrical devices using batteries.

Electrical devices can be vehicles, mobile phones, portable devices, laptops, ships, spacecraft, electric toys, electric tools and the like. The vehicles can be fuel vehicles, gas vehicles or new energy vehicles. The new energy vehicles can be pure electric vehicles, hybrid vehicles, extended-range vehicles and the like. The spacecraft include planes, rockets, space shuttles, spaceships, and the like. The electric toys include stationary or mobile electric toys, such as game consoles, electric car toys, electric ship toys and electric aircraft toys. The electric tools include metal cutting electric tools, grinding electric tools, assembly electric tools and railway electric tools, such as electric drills, electric grinders, electric wrenches, electric screwdrivers, electric hammers, impact drills, concrete vibrators and planers. There are no special restrictions on the above-mentioned electrical devices embodiments of the present disclosure.

The following embodiments, for the sake of illustration, take an electrical device as an example of a vehicle.

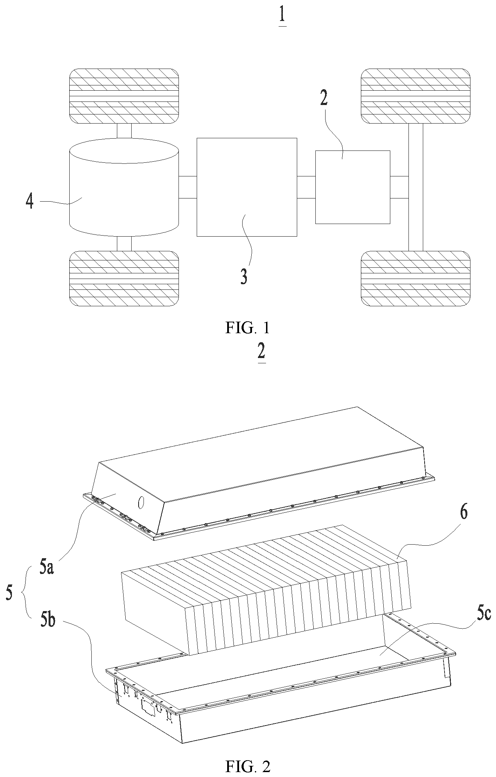

FIG. 1 is a structural diagram of a vehicle provided by some embodiments of the present disclosure.

As shown in FIG. 1, a battery 2 is provided in the interior of a vehicle 1, and can be arranged in the bottom or in the head or back of the vehicle 1. The battery 2 can be used to provide electricity to the vehicle 1, for example, the battery 2 can be used as an operating power source for the vehicle 1.

The vehicle 1 may also include a controller 3 and a motor 4. The controller 3 is used to control the battery 2 to provide electricity to the motor 4, for example, for electricity requirements for the starting, navigation and driving of the vehicle 1.

In some embodiments of the present disclosure, the battery 2 may be used not only as an operating power source for the vehicle 1, but also as a driving power source for the vehicle 1, providing driving power to the vehicle 1 in place or in part in place of fuel or natural gas.

FIG. 2 is an exploded diagram of a battery provided by some embodiments of the present disclosure.

As shown in FIG. 2, the battery 2 includes a box 5 and battery cells 6 housed in the box 5.

The box 5 is used to house the battery cells 6 and can be of a variety of structures. In some embodiments, the box 5 may include a first box part 5a and a second box part 5b that are mutually covered. The first box part 5a and the second box part 5b jointly define the holding space 5c for holding the battery cells 6. The second box part 5b can have a hollow structure with an opening at one end, the first box part 5a can have a plate structure, and the first box part 5a covers and encloses an opening side of the second box part 5b to form the box 5 with the holding space 5c. Both the first box part 5a and the second box part 5b may have a hollow structure with an opening at one side. An opening side of the first box part 5a covers encloses an opening side of the second box part 5b to form the box 5 with the holding space 5c. Of course, the first box part 5a and the second box part 5b can be in a variety of shapes, such as cylinders, cuboids, etc.

In order to improve the tightness of the first box part 5a and the second box part 5b that have been connected, sealing parts, such as sealant and sealing rings, can also be arranged between the first box part 5a and the second box part 5b.

In a case that the first box part 5a covers and encloses the top of the second box part 5b, the first box part 5a may also be called an upper box cover, and the second box part 5b may also be called a lower box.

In the battery 2, one or a plurality of battery cells 6 can be provided. If the plurality of battery cells 6 are provided, the plurality of battery cells 6 can be in a series connection, a parallel connection, or a mixed connection. The mixed connection means that the plurality of battery cells 6 are connected in series and parallel. The plurality of battery cells 6 can be directly in a series connection, a parallel connection, or a mixed connection, and then the entirety composed of the plurality of battery cells 6 is accommodated in the box 5. Of course, the plurality of battery cells 6 can be in a series connection, a parallel connection, or a mixed connection to form a battery module at first, and then, a plurality of battery modules can be in a series connection, a parallel connection, or a mixed connection to form the entirety, and accommodated in the box 5.

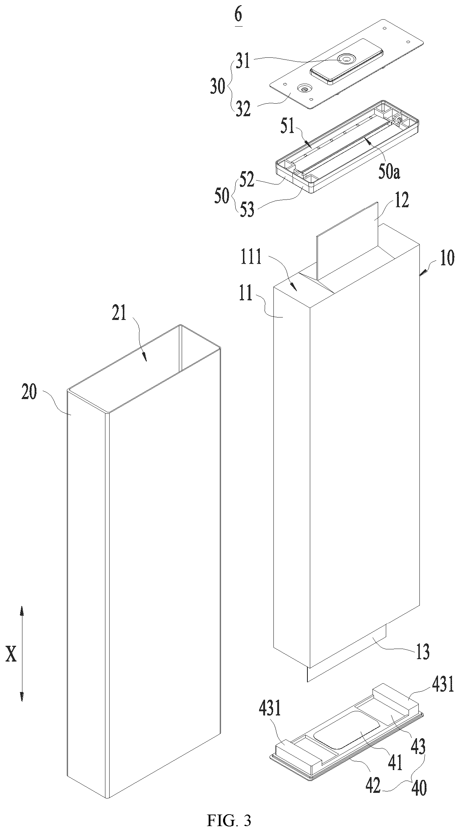

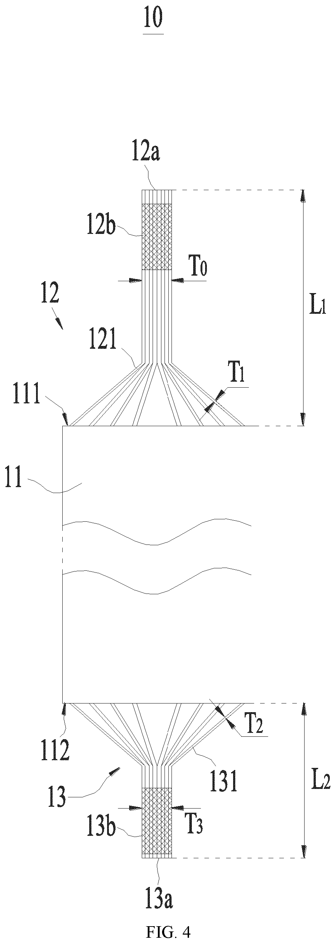

FIG. 3 is an exploded diagram of a battery cell provided by some embodiments of the present disclosure. FIG. 4 is a structural diagram of an electrode assembly of a battery cell provided by some embodiments of the present disclosure.

As shown in FIGS. 3 and 4, the battery cell 6 of the embodiments of the present disclosure includes an electrode assembly 10, a housing 20, a first end cover assembly 30, and a second end cover assembly 40. Openings 21 are provided on two opposite ends of the housing 20. The first end cover assembly 30 and the second end cover assembly 40 are adapted to cover the two openings 21 of the housing 20, respectively. The electrode assembly 10 comprises a body part 11, a first tab 12 and a second tab 13. The first tab 12 extends from a first end face 111 of the body part 11 facing the first end cover assembly 30 and is used to be connected with the first end cover assembly 30. The second tab 13 extends from the body part 11 facing a second end face 112 of the second end cover assembly 40 and is used to be connected with the second end cover assembly 40. The protruding length of the first tab 12 from the first face 111 is defined as $L_1$, the protruding length of the second tab 13 from the second face 112 is defined as $L2$, and $L_2$ is less than $L_1$.

The housing 20 has a hollow structure. The shape of the housing 20 can be determined according to the specific shape of the electrode assembly 10. For example, if the electrode assembly 10 has a cuboid structure, a cuboid housing can be selected. If the electrode assembly 10 has a cylindrical structure, a cylindrical housing can be selected.

The housing 20 may be made of a variety of materials. For example, the housing 20 may be made of metal or plastic. Optionally, the material of the housing 20 can be copper, iron, aluminum, steel, aluminum alloy, etc.

The first end cover assembly 30 and the second end cover assembly 40 are used to close the two openings 21 of the housing 20 to form an accommodation chamber with the housing 20 for housing the electrode assembly 10 and the electrolyte.

The first end cover assembly 30 and the second end cover assembly 40 may also be used to electrically connect the electrode assembly 10 to an external circuit of the battery cell 6 to achieve charge and discharge of electrode assembly 10. Specifically, the first end cover assembly 30 electrically connects the first tab 12 to the external circuit, and the second end cover assembly 40 electrically connects the second tab 13 to the external circuit.

The electrode assembly 10 includes a positive electrode sheet and a negative electrode sheet. The electrode assembly 10, for example, generates electrical energy through oxidation and reduction reactions when ions are intercalate/deintercalate in the positive electrode sheet and the negative electrode sheet.

Optionally, the electrode assembly 10 also includes a separator for insulating the positive electrode sheet and negative electrode sheet.

The electrode assembly 10 may be a wound electrode assembly, stacked electrode assembly, or other types of electrode assemblies. As an example, the electrode assembly 10 is a stacked electrode assembly with a plurality of positive electrode sheets and a plurality of negative electrode sheets alternately stacked.

The body part 11 may, for example, include a portion of the positive electrode sheet applied with an active substance layer, a portion of the negative electrode sheet coated with an active substance layer, and a separator. The active substances in the active substance layers are used for an electrochemical reaction with the electrolyte, etc., to produce a charge-discharge process.

The body part 11 has a first end face 111 and a second end face 112 at two opposite ends, with the first end face 111 facing the first end cover assembly 30 and the second end face 112 facing the second end cover assembly 40. The first end face 111 is the end face of the body part 11 near the first end cover assembly 30. The first end face 111 may be a face formed by an edge of the electrode sheet near the first end cover assembly 30 or a face formed by an edge of the separator near the first end cover assembly 30. Optionally, the edge of the separator near the first end cover assembly 30 forms the first end face 111. The second end face 112 is an end face of the body part 11 near the second end cover assembly 40. The second end face 112 may be a face formed by the edge of the electrode sheet near the second end cover assembly 40 or a face formed by the edge of the separator near the second end cover assembly 40. Illustratively, the edge of the separator near the second end cover assembly 40 forms the second end face 112.

For example, the first end face 111 and the second end face 112 are both roughly flat. Optionally, the first end face 111 and the second end face 112 are roughly parallel to each other.

The polarity of the first tab 12 and the polarity of the second tab 13 are opposite. In other words, one of the first tab 12 and the second tab 13 is a positive tab, and the other is a negative tab.

The first tab 12 extends from the first end face 111. The first tab 12 has a first root near the first end face 111 and a first end part 12a away from the first end face 111. For example, after the whole first tab 12 is flattened, the maximum distance between the first end part 12a of the first tab 12 and the first end face 111 in a direction perpendicular to the first end face 111 may be $L_1$. In other words, after disconnecting the connection between the first tab 12 and the first end cover assembly 30, the maximum distance that can be achieved between the first end part 12a and the first end face 111 in the direction perpendicular to the first end face 111 may be $L_1$.

The second tab 13 extends from the second end face 112. The second tab 13 has a second root near the second end face 112 and a second end part 13a away from the second end face 112. For example, after the whole second tab 13 is flattened, the maximum distance between the second end part 13a of the second tab 13 and the second end face 112 in a direction perpendicular to the second end face 112 may be $L_2$. In other words, after disconnecting the connection between the second tab 13 and the second end cover assembly 40, the maximum distance that can be achieved between the second end part 13a and the second end face 112 in the direction perpendicular to the second end face 112 may be $L_2$.

In embodiments of the present disclosure, the second tab 13 has a smaller protruding length than the first tab 12, which can reduce the redundancy of the second tab 13, reduce the risk of the second tab 13 being inserted into the body part 11 when the battery cell 6 is subjected to external impact, reduce the potential short circuit, and improve safety. The first tab 12 has a larger protruding length than the second tab 13, which can reduce the connection difficulty between the first tab 12 and the first end cover assembly 30 and simplify the assembly process. In the embodiments of the present disclosure, the length of the first tab 12 and the length of the second tab 13 are designed differently to reduce the risk of the second tab 13 being inserted into the body part 11 and improve the safety under the premise of meeting the assembly requirements.

In some embodiments, the electrode assembly 10 is configured to be mounted into the housing 20 after the second tab 13 is connected to the second end cover assembly 40. The connection process of the second tab 13 and the second end cover assembly 40 will not be interfered by the housing 20, which can reduce the requirements on the length $L_2$ of the second tab 13 and reduce the redundancy of the second tab 13, thus reducing the risk of the second tab 13 being inserted into the body part 11 when the battery cell 6 is subjected to external impact, reducing the risk of short circuit and improving safety.

In some embodiments, the first end cover assembly 30 includes a first electrode leading-out member 31, and the second end cover assembly 40 includes a second electrode leading-out member 41. The first tab 12 is electrically connected to the first electrode leading-out member 31, and the second tab 13 is electrically connected to the second electrode leading-out member 41.

The first electrode leading-out member 31 electrically connects the first tab 12 to an external circuit, and the second electrode leading-out member 41 electrically connects the second tab 13 to an external circuit, thereby achieving charge and discharge of the electrode assembly 10.

In some embodiments, the first tab 12 is welded to the first electrode leading-out member 31.

In some embodiments, the second tab 13 is welded to the second electrode leading-out member 41.

In some embodiments, the first end cover assembly 30 also includes a first end cover 32 used to cover the opening 21 of the housing 20.

The shape of the first end cover 32 may be adapted to the shape of the housing 20 to fit the housing 20. Optionally, the first end cover 32 can be made of a material with a certain hardness and strength (such as aluminum alloy), so the first end cover 32 is not easy to deform when subjected to compression or impact, and thus the battery cell 6 can have higher structural strength and the safety performance can also be improved.

In some examples, the first electrode leading-out member 31 and the first end cover 32 may be separate parts, and the first electrode leading-out member 31 may be mounted on the first end cover 32. In some alternative examples, the first electrode leading-out member 31 and the first end cover 32 can also be formed as an integral.

In some embodiments, the first end cover 32 is welded to the housing 20.

In some embodiments, the second end cover assembly 40 also includes a second end cover 42 for covering the opening 21 of the housing 20.

In some examples, the second electrode leading-out member 41 and the second end cover 42 may be separate parts, and the second electrode leading-out member 41 may be mounted on the second end cover 42. In some alternative examples, the second electrode leading-out member 41 and the second end cover 42 can also be formed as an integral.

In some examples, the second end cover 42 is welded to the housing 20.

In some embodiments, the first tab 12 includes a plurality of first tab layers 121 stacked with each other. By the plurality of first tab layers 121, a current carrying capacity of the first tab 12 can be increased, the heat production of the first tab 12 can be reduced, and the risk of the fusing of the first tab 12 can be reduced.

For example, each first tab layer 121 is a metal foil which is not coated with an active substance layer. Optionally, the first tab layer may be an aluminum foil, a steel foil, a nickel foil or a copper foil.

In some embodiments, the first tab 12 is provided with a first welding area 12b. In the first welding area 12b, the plurality of first tab layers 121 are connected. For example, the plurality of first tab layers 121 may be welded by ultrasonic welding to form a first welding area 12b. By the first welding area 12b, the plurality of first tab layers 121 can be gathered and connected, thereby reducing the risk of the plurality of first tab layers 121 being misaligned in subsequent assembly processes.

In some embodiments, at least part of the first welding area 12b is used to be welded with the first electrode leading-out member 31.

In some embodiments, ends of the plurality of first tab layers 121 away from the first end face 111 are flush with each other.

In some embodiments, the second tab 13 includes a plurality of second tab layers 131 stacked with each other. By the plurality of second tab layers 131, a current carrying capacity of the second tab 13 can be increased, the heat production of the second tab 13 can be reduced, and the risk of the fusing of the second tab 13 can be reduced.

For example, each second tab layer 131 is a metal foil which is not coated with an active substance layer. Optionally, the second tab layer may be an aluminum foil, a steel foil, a nickel foil or a copper foil.

In some embodiments, the second tab 13 is provided with a second welding area 13b. In the second welding area 13b, the plurality of second tab layers 131 are connected. For example, the plurality of second tab layers 131 may be welded by ultrasonic welding to form a second welding area 13b. By the second welding area 13b, the plurality of second tab layers 131 can be gathered and connected, thereby reducing the risk of the plurality of second tab layers 131 being misaligned in subsequent assembly processes.

In some embodiments, ends of the plurality of second tab layers 131 away from the second end face 112 are flush with each other.

In some embodiments, at least part of the second welding area 13b is used to be welded with the second electrode leading-out member 41.

In some embodiments, the melting point of the first tab 12 is lower than that of the second tab 13.

Compared with the second tab 13, the first tab 12 has a longer path for current flow, the heat production of the first tab 12 is more, and the melting point of the first tab 12 is lower. Therefore, when the battery cell 6 is short-circuiting, the first tab 12 is more likely to fuse, thereby cutting the circuit in time and reducing the safety risk.

In some embodiments, the material of the first tab 12 includes aluminum and the material of the second tab 13 includes copper.

In some embodiments, the first tab 12 is the positive tab and the second tab 13 is the negative tab.

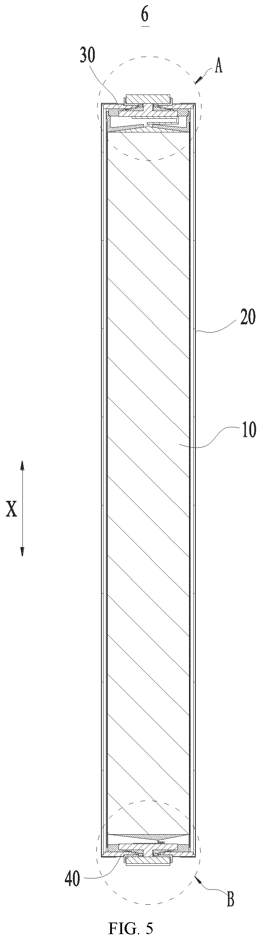

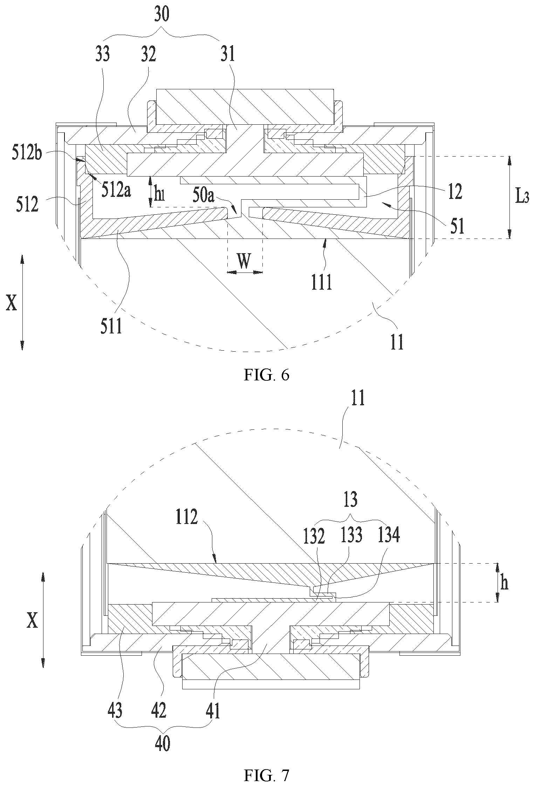

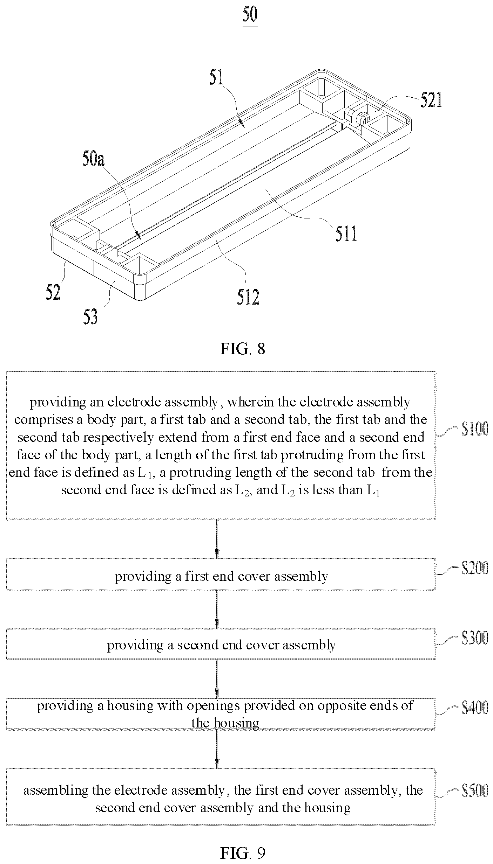

FIG. 5 is a sectional diagram of a battery cell provided by some embodiments of the present disclosure. FIG. 6 is an enlarged diagram of a part in a circle A of the battery cell as shown in FIG. 5. FIG. 7 is an enlarged diagram of a part in a circle B of the battery cell as shown in FIG. 5. FIG. 8 is a structural diagram of an isolation member shown in FIG. 3.

Referring to FIGS. 3 to 8, in some embodiments, the battery cell 6 also includes an isolation member 50. At least part of the isolation member 50 is located between the first end cover assembly 30 and the first end face 111. The isolation member 50 is provided with a channel 50a, and the first tab 12 passes through the channel 50a and is electrically connected with the first electrode leading-out member 31.

The isolation member 50 may be entirely located either between the first end cover assembly 30 and the first end face 111, or only partially between the first end cover assembly 30 and the first end face 111.

The isolation member 50 may have an integral structure or a split structure. For example, the isolation member 50 may be connected by a plurality of parts that are independently formed.

The channel 50a may be used to connect the space between the isolation member 50 and the first end face 111 to the space between the isolation member 50 and the first electrode leading-out member 31, so the first tab 12 can be connected to the first electrode leading-out member 31.

The portion of the first tab 12 accommodated in the channel 50a and the channel 50a may be in an interference fit, a clearance fit, or a transition fit.

The isolation member 50 can insulate and isolate at least part of the first tab 12 passing through the channel 50a from the first end face 111 of the body part 11, thereby reducing the risk of the first tab 12 being inserted into the body part 11 when the battery cell 6 is subjected to an external impact, reducing the risk of short circuits and improving safety. The second tab 13 has a smaller protruding length than the first tab 12, and thus is not easily to be inserted into the body part 11. Therefore, there is no need to provide another isolation member between the second end cover assembly 40 and the second end face 112 in the embodiments of the present disclosure, which can save space and increase the energy density of the battery cell 6.

In some embodiments, the first tab 12 includes the plurality of first tab layers 121 stacked with each other within the channel 50a. The dimension of the channel 50a along its own width direction is defined as $W$, and the total thickness of the plurality of first tab layers 121 is defined as $T_0$, and $W$ and $T_0$ meet: $W > T_0$.

For example, the thickness of each first pole ear layer 121 is defined as $T_1$, the number of first tab layers 121 is defined as $M$, and $M$ is a positive integer greater than 1. $T_0 = T_1 \times M$.

The width direction of the channel 50a is roughly parallel to a stacking direction of the plurality of first tab layers 121 located within the channel 50a.

If $W \leq T_0$, the wall of the channel 50a will clamp the plurality of first tab layers 121. When the body part 11 shakes due to external impact applied on the battery cell 6, it is difficult for the part of the first tab layers 121 located in the channel 50a to release stress through deformation, which will cause stress concentration on the first tab layers 121 and thereby cause a risk of cracking of the first tab layers 121. In the embodiments of the present disclosure, $W > T_0$ is set to provide movement space for the first pole layers 121 in the channel 50a to reduce stress concentration and the risk of cracking of the first tab layers 121.

In some embodiments, $W$ and $T_0$ meet: $0.5\text{mm} \leq W - T_0 \leq 4\text{mm}$.

The smaller the value of $W - T_0$, the smaller the movement space of the first tab layers 121 in the channel 50a. If the value of $W - T_0$ is too small, when the body part 11 is shaken by external impact applied on the battery cell 6, the friction easily occurs between the first tab layers 121 and the wall of the channel 50a, resulting in the risk of wear of the first tab layers 121. In view of this, the inventors make the value of $W - T_0$ greater than or equal to 0.5mm to reduce the risk of friction and wear of the first tab layers 121 and ensure the current carrying capacity of the first tab 12.

If the value of $W - T_0$ is too large, the wall of the channel 50a cannot effectively bind the first tab layers 121, and the first tab layers 121 are prone to occur excessive deformation, resulting in the risk of the first tab layers 121 being inserted upside down into the body part 11. In view of this, the inventors make the value of $W - T_0$ less than or equal to 4mm in order to effectively bind multiple first pole layer 121.

As above, the value of $W - T_0$ is limited to 0.5mm-4mm, so the plurality of first tab layers 121 are not clamped in the channel 50a, which can bind the plurality of first tab layers 121 to a certain extent and reduce the deformation of the first tab layers 121, and further reduces the friction between the first tab layers 121 and the wall of the channel 50a, thereby reducing the risk of friction and wear of the first tab layers 121.

Optionally, the value of $W - T_0$ is 0.5mm, 1mm, 1.5mm, 2mm, 2.5mm, 3mm, 3.5mm, or 4mm.

In some embodiments, $W$ and $T_0$ meet: $1\text{mm} \leq W - T_0 \leq 3\text{mm}$.

In some embodiments, during assembly of the battery cell 6, the first tab 12 may be passed through the channel 50a and then connected to the first tab 12 and the first electrode leading-out member 31. In alternative embodiments, the first tab 12 and the first electrode leading-out member 31 may also be connected at first, and then the isolation member 50 may be installed.

In some embodiments, the maximum dimension of the isolation member 50 is defined as $L_3$ along the thickness direction X of the first end cover assembly. $L_1$, $L_2$, and $L_3$ meet: $L_1 - L_2 \geq 0.8 \cdot L_3$.

The second tab 13 may be directly connected with the second electrode leading-out member 41, and may have a smaller protruding length than the first tab 12. The first tab 12 needs to pass through the channel 50a and then connect with the first electrode leading-out member 31. When the first electrode leading-out member 31 and the first tab 12 are assembled, the distance between the first electrode leading-out member 31 and the first end face 111 will be limited by the isolation member 50. In the embodiments of the present disclosure, $L_1 - L_2 > 0.8 \cdot L_3$ is set to ensure the protruding dimension of the first tab 12 from the isolation member 50, so the connection area between the first electrode leading-out member 31 and the first tab 12 meets the requirements.

In some embodiments, $L_1$, $L_2$, and $L_3$ satisfy: $L_1 - L_2 \geq L_3$.

In the embodiments of the present disclosure, the first tab 12 extends from the isolation member 50 by a sufficient distance to reduce the difference between the connection area between the first electrode leading-out member 31 and the first tab 12 and the connection area between the second electrode leading-out member 41 and the second tab 13 and improve the uniformity in current carrying between the first tab 12 and the second tab 13.

In some embodiments, $L_3$ has a value of 3mm-20mm. Optionally, $L_3$ has a value of 8mm-12mm.

In some embodiments, the housing 20 is provided with openings 21 at both ends in the thickness direction X of the first end cover assembly. For example, the thickness direction X of the first end cover assembly is perpendicular to the first end face 111 and the second end face 112. For example, the isolation member 50 is located on the side of the first end face 111 along the thickness direction X of the first end cover assembly.

In some embodiments, the first end cover assembly 30 also includes a first end cover 32 and a first insulator 33, the first end cover 32 is connected to the housing 20, the first insulator 33 is arranged on the side of the first end cover 32 facing the body part 11, and the first electrode leading-out member 31 is arranged on the first end cover 32. In the thickness direction X of the first end cover assembly, at least part of the isolation member 50 is located between the first end face 111 and the first insulator 33.

The first insulator 33 may be fixed to the isolation member 50 or may not be fixed to the isolation member 50.

The first insulator 33 may be used to insulate and isolate the first end cover 32 from the electrode assembly 10 to reduce the risk of short circuit.

The first insulator 33 and the first end face 111 can limit the isolation member 50 from both sides to reduce the shaking amplitude of the isolation member 50 when the battery cell 6 is subjected to external impact.

In some embodiments, the material of the first insulator 33 is plastic.

In some embodiments, the first insulator 33 is arranged on the inner surface of the first end cover 32.

In some embodiments, at least part of the isolation member 50 is clamped between the first insulator 33 and the first end face 111 of the body part 11 in the thickness direction X of the first end cover assembly.

The first insulator 33 and the first end face 111 of the body part 11 clamp at least part of the isolation member 50 from both sides, to restrict the movement of the isolation member 50 in the thickness direction X of the first end cover assembly, and further to reduce the shaking amplitude of the isolation member 50 along the thickness direction X of the first end cover assembly when the battery cell 6 is subjected to external impact and improve safety.

In some embodiments, the side of the isolation member 50 away from the first end face 111 is provided with an accommodation recess 51. The channel 50a passes through a bottom wall 511 of the accommodation recess 51. A part of the first tab 12 passing through the channel 50a is accommodated in the accommodation recess 51. At least part of the first insulator 33 is accommodated in the accommodation recess 51.

The part of the first insulator 33 accommodated in the accommodation recess 51 may limit the position of the isolation member 50, thereby restricting the movement of the isolation member 50 in a direction perpendicular to the thickness direction X of the first end cover assembly. The bottom wall 511 of the accommodation recess 51 can separate part of the first tab 12 from the first end face 111 to reduce the risk of the first tab 12 being inserted into the body part 11.

In some embodiments, the side wall 512 of the accommodation recess 51 is provided with a step face 512a, and the part of the first insulator 33 accommodated in the accommodation recess 51 is pressed against the step face 512a. The first insulator 33 is pressed against the step surface 512a to limit the movement of the isolation member 50 in the thickness direction X of the first end cover assembly.

In some embodiments, the step face 512a is parallel to the first end face 111.

In some embodiments, the side wall 512 of the accommodation recess 51 is provided with a limit face 512b adjacent to the step face 512a. The limit face 512b surrounds the outer side of the first insulator 33 and is fitted to the first insulator 33.

The first insulator 33 and the first end face 111 clamp the isolation member 50, to fix the isolation member 50 in the thickness direction X of the first end cover assembly. The first insulator 33 is fitted to the limit face 512b of the isolation member 50 to enable the isolation member 50 to be fixed in a direction perpendicular to the thickness direction X of the first end cover assembly.

In some embodiments, the part of the first insulator 33 accommodated in the accommodation recess 51 is snapped into the isolation member 50, to fix the isolation member 50. In some alternative embodiments, the part of the first insulator 33 accommodated in the accommodation recess 51 may also be fused with the isolation member 50.

In some embodiments, the part of the first tab 12 accommodated in the accommodation recess 51a is bent and arranged between the first electrode leading-out member 31 and the bottom wall 511 of the accommodation recess 51. The first pole layer 12 comprises M first pole layers 121 stacked with each other, M is defined as a positive integer greater than 1, and the thickness of each first pole layer 121 is defined as $T_1$. Along the thickness direction X of the first end cover assembly, the minimum distance between the first electrode leading-out member 31 and the bottom wall 511 of the accommodation recess is defined as h1, $h1 > 2M \cdot T_1$.

In the embodiments of the present disclosure, $h1 > 2M \cdot T_1$ is set to provide space for the bending of the first tab 12 in the thickness direction X of the first end cover assembly, thereby reducing the risk of the first tab 12 being inserted into the body part 11 after bending, and improving safety.

In some embodiments, the first insulator 33 is pressed against the first end face 111 through the isolation member 50.

The first insulator 33 restricts the movement of the body part 11 through the isolation member 50, to reduce the shaking amplitude of the body part 11 along the thickness direction X of the first end cover assembly when the battery cell 6 is subjected to external impact, thereby reducing the loss of active substances, and improving safety.

In some embodiments, the isolation member 50 includes a first isolator 52 and a second isolator 53 connected to the first isolator 52. The channel 50a is formed between the first isolator 52 and the second isolator 53.

The first isolator 52 and the second isolator 53 may be connected by snap-in, welding, bonding or other means.

The first isolator 52 and the second isolator 53 can limit the position of the first tab 12 to reduce the shaking and deformation of the first tab 12 when the battery cell 6 is subjected to external impact. The first isolator 52 and the second isolator 53 are independently formed and connected to make the assembly of the isolation member 50 and the electrode assembly 10 more flexible.

In some examples, the isolation member 50 may be assembled at first, the first tab 12 is passed through the channel 50a of the isolation member 50, and then the first tab 12 and the first electrode leading-out member 31 may be connected. In other examples, the first connecting tab 12 and the first electrode leading-out member 31 may be assembled at first, and the first isolator 52 and the second isolator 53 are assembled from both sides of the first tab 12, to mount the isolation member 50 that have been assembled on the first tab 12.

For example, the first isolator 52 is provided with a snapping protrusion 521, the second isolator 53 is provided with a snapping hole fitting with the snapping protrusion 521, and the snapping protrusion 521 is inserted into the snapping hole so the first isolator 52 is snapped into the second isolator 53.

In other embodiments, the isolation member 50 has an integral structure. By providing the integral isolation member 50, the isolation member 50 can have a higher overall strength, and the assembly process of the isolation element 50 can be eliminated.

In some embodiments, the second end cover assembly 40 also includes a second end cover 42 and a second insulator 43, the second end cover 42 is connected to the housing 20, and the second electrode leading-out member 41 is arranged on the second end cover 42. The second insulator 43 is arranged on a side of the second end cover 42 facing the body part 11, and the second insulator 43 is directly pressed against the second end face 112.

The second insulator 43 may be used to insulate and isolate the second end cover 42 from the electrode assembly 10 to reduce the risk of short circuit. The second insulator 43 can restrict the movement of the body part 11 in the thickness direction of the second end cover assembly, thereby reducing the shaking amplitude of the body part 11 in the thickness direction of the second end cover assembly when the battery cell 6 is subjected to external impact, reducing the loss of active substances and improving safety.

In some embodiments, the thickness direction of the second end cover assembly is parallel to the thickness direction X of the first end cover assembly.

In some embodiments, the second insulator 43 and the isolation member 50 may limit the position of the body part 11 from both sides to reduce the shaking amplitude of the body part 11 when the battery cell 6 is subjected to external impact.

In some embodiments, the isolation member 50 and the second insulation member 43 clamp body part 11 from both sides to restrict the movement of the body part 11 in the thickness direction X of the first end cover assembly, to reduce the shaking amplitude of the body part 11 along the thickness direction X of the first end over assembly when the battery cell 6 is subjected to external impact to reduce the loss of active substances and improve safety.

In some embodiments, the side of the second insulator 43 facing the body part 11 is provided with an insulation protrusion 431 pressed against the second end face 112.

In some embodiments, the second tab 13 is bent and arranged between the second electrode leading-out member 41 and the second end face 112. The second tab 13 comprises N second tab layers 131 stacked with each other, with N being defined as a positive integer greater than 1, and the thickness of each second tab layer 131 is defined as $T_2$. In the thickness direction of the second end cover assembly, the minimum distance between the second electrode leading-out member 41 and the second end face 112 is defined as h, and $h > 2N \cdot T_2$.

In embodiments of the present disclosure, $h > 2N \cdot T_2$ is defined to provide space for the bending of the second tab 13 in the direction of the thickness of the second end cover assembly, to reduce the risk of the second tab 13 that has been bent being inserted into the body part 11 and improve safety.

The second tab 13 includes a first segment 132, a second segment 133 and a bending segment 134. The first segment 132 is connected to the second end cover assembly 40. The second segment 133 is located on the side of the first segment 132 facing the body part 11 and connected to the body part 11. The bending segment 134 is bent relative to the first segment 132 and is used to connect the first segment 132 and the second segment 133.

The first segment 132 may be parallel to the second segment 133. Alternatively, an angle greater than 0° can be formed between the first segment 132 and the second segment 133.

The thickness $T_3$ of the first segment 132 is defined to be equal to $N \cdot T_2$.

In some embodiments, the first segment 132 is roughly parallel to the second end face 112.

According to some embodiments of the present disclosure, the present disclosure also provides a battery, including a plurality of battery cells of any of the above embodiments.

According to some embodiments of the present disclosure, the present disclosure also provides an electrical device, including a battery of any of the above embodiments, which is used to supply electrical energy for the electrical device. The electrical device may be any of the devices or systems with the aforementioned battery cells.

According to some embodiments of the present disclosure, referring to FIGS. 3 to 7, the present disclosure provides the battery cell 6, including the electrode assembly 10, the housing 20, the first end cover assembly 30, the second end cover assembly 40 and the isolation member 50. The housing 20 is provided with the openings 21 on two opposite ends. The first end cover assembly 30 includes the first end cover 32 and the first electrode leading-out member 31 disposed on the first end cover 32. The second end cover assembly 40 includes the second end cover 42 and the second electrode leading-out member 41 disposed on the second end cover 42. The first end cover 32 and the second end cover 42 are used to cover the two openings 21 of the housing 20, respectively.

The electrode assembly 10 includes the body part 11, the first tab 12 and the second tab 13. The first tab 12 extends from the first end face 111 of the body part 11 facing the first end cover assembly 30 and is used to be connected to the first electrode leading-put member 31. The second tab 13 extends from the second end face 112 of the body part 11 facing the second end cover assembly 40 and is used to connect the second electrode leading-out member 41. The protruding length of the first tab 12 from the first end face 111 is defined as $L_1$, the protruding length of the second tab 13 from the second end face 112 is defined as $L_2$, and $L_2$ is less than $L_1$.

At least part of the isolation member 50 is located between the first end cover assembly 30 and the first end face 111. The isolation member 50 is provided with the channel 50a, and the first tab 12 passes through the channel 50a and is electrically connected to the first electrode leading-out member 31.

FIG. 9 is a flowchart of a manufacturing method for a battery cell provided by some embodiments of the present disclosure.

As shown in FIG. 9, the manufacturing method for a battery cell according to embodiments of the present disclosure includes:

a step S100, providing an electrode assembly which includes a body part, a first tab and a second tab, wherein the first tab and the second tab extend from a first end face and a second end face of the body part respectively, a protruding length of the first tab from the first end face is defined as L1, a protruding length of the second tab from the second end face is defined as L2, and L2 is less than L1;
step S200, providing a first end cover assembly;
step S300, providing a second end cover assembly;
step S400, providing a housing with openings provided on two opposite ends of the housing opposite to each other; and
step S500, assembling the electrode assembly, the first end cover assembly, the second end cover assembly and the housing, wherein the first end cover assembly and the second end cover assembly cover the two openings of the housing respectively, the first end face faces the first end cover assembly, the second end face faces the second end cover assembly, the first tab is configured to be connected with the first end cover assembly, and the second tab is configured to be connected with the second end cover assembly.

It should be noted that the relevant structure of the battery cell manufactured by the manufacturing method for a battery cell may refer to the battery cell provided by the above embodiments.

When assembling the battery cell based on the manufacturing method for a battery cell described above, it is not necessary to follow the sequence of steps described above. That is, the steps may be performed in the order mentioned in the embodiment, or may be performed in a different order than the steps mentioned in the embodiment, or several steps are performed simultaneously. For example, the steps S200, S300, S400 are performed in no particular order, and can also be carried out simultaneously. For example, the steps S200, S300 and S400 may be executed according to the assembly sequence of the step S500.

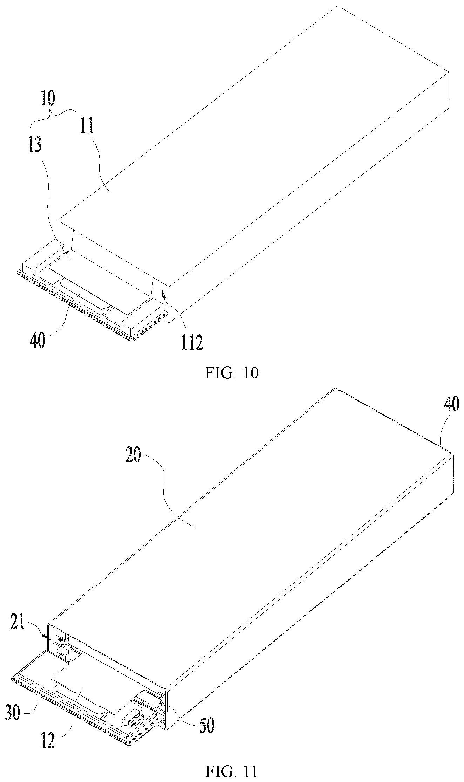

FIG. 10 and FIG. 11 are diagrams of a battery cell during a manufacturing process provided by some embodiments of the present disclosure.

In some embodiments, as shown in FIGS. 10 and 11, the step S500 includes:

step S11, connecting the second tab 13 and the second end cover assembly 40;
step S12, inserting the electrode assembly 10 into the housing 20 through one opening 21 of the housing 20 for the first tab 12 to protrude through the other opening 21 of the housing 20;
step S13, connecting the second end cover assembly 40 and the housing 20 to cover the one opening 21 through the second end cover assembly 40;
step S14, connecting the first tab 12 and the first end cover assembly 30;
step S15, connecting the first end cover assembly 30 and the housing 20 to cover the other opening 21 through the first end cover assembly 30;
wherein the step S11 to step S15 are performed in sequence.

The steps S100, S200, 5300 and S400 may be executed in the order of the steps S11 to S15. In some examples, the manufacturing method for a battery cell may perform the steps S100, S300, S11, S400, S12, S13, S200, S14 and S15 sequentially. In other examples, the manufacturing method for a battery cell may perform steps S100, S200, S300, S400, S11, S12, S13, S14 and S15 sequentially. In yet another example, the manufacturing method for a battery cell may perform the steps S100, S300, S400, S11, S12, S13, S200, S14 and S15 sequentially. Of course, the manufacturing method for a battery cell of embodiments of the present disclosure may also be performed in other orders.

In embodiments of the present disclosure, the step S11 is performed before the step S12, the connection process of the second tab 13 and the second end cover assembly 40 will not be interfered by the housing 20, to reduce the requirement on the length $L_2$ of the second tab 13, reduce the redundancy of the second tab 13, thereby reducing the risk of the second tab 13 being inserted into the body part 11 when the battery cell is subjected to external impact, reducing the potential danger of short circuit, and improving safety.

Step S14 needs to be performed after the step S13, the connection process of the first tab 12 and the first end cover assembly 30 will be limited by the housing 20. The first tab 12 of the embodiments of the present disclosure having a relatively large length $L_1$ can protrude from the housing 20 and is connected with the first end cover assembly 30, thereby reducing the connection difficulty of connecting the first tab 12 and the first end cover assembly 30 and simplifying the assembly process.

In some other embodiments, the step S500 includes:

step S21, placing the electrode assembly into the housing for the first tab and the second tab to protrude through two openings of the housing respectively;
step S22, connecting the second tab and the second end cover assembly;
step S23, connecting the second end cover assembly and the housing to cover the one opening of the housing through the second end cover assembly;
step S24, connecting the first tab and the first end cover assembly;
step S25, connecting the first end cover assembly and the housing to cover the other opening of the housing through the first end cover assembly;
wherein the step S21 to step S25 are performed in sequence.

In some examples, the manufacturing method for a battery cell may perform the steps S100, S400, S21, S300, S22, S23, S200, S24 and S25 sequentially. In other examples, the manufacturing method for a battery cell may perform the steps S100, S200, S300, S400, S21, S22, S23, S24 and S25 sequentially. Of course, the manufacturing method for a battery cell according to embodiments of the present disclosure may also be performed in other orders.

It should be noted that, without conflict, embodiments and features in embodiments of the present disclosure may be combined with each other.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some of the technical features with equivalents, but these modifications or replacements do not depart the essence of the corresponding technical solutions from the gist and scope of the technical solutions of each embodiment of the present disclosure.

## Claims

1. A battery cell, comprising:

   a housing with openings provided on two ends of the housing opposite to each other;
   a first end cover assembly and a second end cover assembly configured to cover the two openings of the housing, respectively; and
   an electrode assembly comprising a body part, a first tab and a second tab, wherein the first tab extends from a first end face of the body part facing the first end cover assembly and is configured to be connected with the first end cover assembly, the second tab extends from a second end face of the body part facing the second end cover assembly and is configured to be connected with the second end cover assembly, wherein a protruding length of the first tab from the first end face is defined as $L_1$, a protruding length of the second tab from the second end face is defined as $L_2$, and $L_2$ is less than $L_1$.

2. The battery cell of claim 1, wherein the first end cover assembly comprises a first electrode leading-out member, and the second end cover assembly comprises a second electrode leading-out member; and the first tab is configured to be electrically connected with the first electrode leading-out member, and the second tab is configured to be electrically connected with the second electrode leading-out member.

3. The battery cell of claim 2, further comprising an isolation member, wherein at least part of the isolation member is located between the first end cover assembly and the first end face; and the isolation member is provided with a channel, and the first tab passes through the channel to be electrically connected with the first electrode leading-out member.

4. The battery cell of claim 3, wherein the first tab comprises a plurality of first tab layers, and portions of the first tab layers located in the channel are stacked with each other; and

a dimension of the channel along its own width direction is defined as W, a total thickness of the plurality of first tab layers is defined as $T_0$, and W and $T_0$ meet: $0.5mm \leq W-T_0 \leq 4mm$.

5. The battery cell of claim 3 or 4, wherein the maximum dimension of the isolation member along a thickness direction of the first end cover assembly is defined as $L_3$; and

$L_1$, $L_2$, and $L_3$ meet: $L_1-L_2 \geq 0.8 \cdot L_3$.

6. The battery cell of claim 5, wherein $L_1$, $L_2$ and $L_3$ meet: $L_1-L_2 \geq L_3$.

7. The battery cell of any one of claims 3 to 6, wherein the first end cover assembly further comprises a first end cover and a first insulator, the first end cover is configured to be connected with the housing, the first insulator is arranged on a side of the first end cover facing the body part, and the first electrode leading-out member is arranged on the first end cover; and

in a thickness direction of the first end cover assembly, at least part of the isolation member is located between the first end face and the first insulator.

8. The battery cell of claim 7, wherein a side of the isolation member away from the first end face is provided with an accommodation recess, the channel passes through a bottom wall of the accommodation recess, and a part of the first tab passing through the channel is accommodated in the accommodation recess; and

at least part of the first insulator is accommodated in the accommodation recess.

9. The battery cell of claim 8, wherein the part of the first tab accommodated in the accommodation recess is bent and arranged between the first electrode leading-out member and the bottom wall of the accommodation recess;

the first tab comprises M first tab layers stacked with each other, with M being defined as a positive integer greater than 1, and a thickness of each first tab layer is defined as $T_1$; and

along the thickness direction of the first end cover assembly, the minimum distance between the first electrode leading-out member and the bottom wall of the accommodation recess is defined as $h_1$, and $h_1 > 2M \cdot T_1$.

10. The battery cell of any one of claims 7 to 9, wherein the first insulator is pressed against the first end face through the isolation member.

11. The battery cell of any one of claims 3 to 10, wherein the isolation member comprises a first isolator and a second isolator connected to the first isolator, and the channel is formed between the first isolator and the second isolator.

12. The battery cell of any one of claims 2 to 11, wherein the second end cover assembly further comprises a second end cover and a second insulator, the second end cover is connected to the housing, and the second electrode leading-out member is arranged on the second end cover; and

the second insulator is arranged on a side of the second end cover facing the body part, and the second insulator is directly pressed against the second end face.

13. The battery cell of claim 12, wherein

the second tab is bent and arranged between the second electrode leading-out member and the second end face;
the second tab comprises N second tab layers stacked with each other, N is defined as a positive integer greater than 1, and a thickness of each second tab layer is defined as $T_2$; and
along the thickness direction of the second end cover assembly, the minimum distance between the second electrode leading-out member and the second end face is defined as h, and $h > 2N \cdot T_2$.

14. The battery cell of any one of claims 1 to 13, wherein a melting point of the first tab is lower than that of the second tab.

15. The battery cell of any one of claims 1 to 14, wherein the first tab is configured as a positive tab and the second tab is configured as a negative tab.

16. A battery comprising a plurality of battery cells of any one of claims 1 to 15.

17. An electrical device comprising a battery of claim 16 configured to supply electrical energy.

18. A manufacturing method for a battery cell, comprising:

providing an electrode assembly, wherein the electrode assembly comprises a body part, a first tab and a second tab, the first tab and the second tab respectively extend from a first end face and a second end face of the body part, a protruding length of the first tab from the first end face is defined as $L_1$ a protruding length of the second tab from the second end face is defined as $L_2$, and $L_2$ is less than $L_1$;

providing a first end cover assembly;

providing a second end cover assembly;

providing a housing with openings provided on ends of the housing opposite to each other; and

assembling the electrode assembly, the first end cover assembly, the second end cover assembly and the housing,

wherein the first end cover assembly and the second end cover assembly respectively cover and enclose two openings of the housing, the first end face faces the first end cover assembly, the second end face faces the second end cover assembly, the first tab is configured to be connected with the first end cover assembly, and the second tab is configured to be connected with the second end cover assembly.

19. The manufacturing method of claim 18, wherein steps of assembling the electrode assembly, the first end cover assembly, the second end cover assembly and the housing comprises:

a step (S11) of connecting the second tab and the second end cover assembly;

a step (S12) of inserting the electrode assembly into the housing through one opening of the housing for the first tab to protrude through the other opening of the housing;

a step (S13) of connecting the second end cover assembly and the housing to cover the one opening through the second end cover assembly;

a step (S14) of connecting the first tab and the first end cover assembly; and

a step (S15) of connecting the first end cover assembly and the housing to cover the other opening through the first end cover assembly;

wherein the step (S11) to step (S15) are performed in sequence.

20. The manufacturing method of claim 18, wherein steps of assembling the electrode assembly, the first end cover assembly, the second end cover assembly and the housing comprises:

a step (S21) of placing the electrode assembly in the housing for the first tab and the second tab to protrude through two openings of the housing respectively;

a step (S22) of connecting the second tab and the second end cover assembly;

a step (S23) of connecting the second end cover assembly and the housing to cover the one opening of the housing through the second end cover assembly;

a step (S24) of connecting the first tab and the first end cover assembly; and

a step (S25) of connecting the first end cover assembly and the housing to cover the other opening of the housing through the first end cover assembly;

wherein the step (S21) to step (S25) are performed in sequence.

1

FIG. 1

2

FIG. 2

FIG. 3

FIG. 4

FIG. 5

EP 4 507 083 A1

FIG. 6

FIG. 7

21

50

51

521

50a

511

52

53

512

FIG. 8

providing an electrode assembly, wherein the electrode assembly comprises a body part, a first tab and a second tab, the first tab and the second tab respectively extend from a first end face and a second end face of the body part, a length of the first tab protruding from the first end face is defined as $L_1$, a protruding length of the second tab from the second end face is defined as $L_2$, and $L_2$ is less than $L_1$ ⸺ S100

providing a first end cover assembly ⸺ S200

providing a second end cover assembly ⸺ S300

providing a housing with openings provided on opposite ends of the housing ⸺ S400

assembling the electrode assembly, the first end cover assembly, the second end cover assembly and the housing ⸺ S500

FIG. 9

FIG. 10

FIG. 11

## INTERNATIONAL SEARCH REPORT

| International application No. |
| --- |
| **PCT/CN2022/107122** |

**A.    CLASSIFICATION OF SUBJECT MATTER**

H01M 50/172(2021.01)i;  H01M 50/502(2021.01)n

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 极耳, 引线, 转接板, 长度, 高度, 穿过, 两, 开口, battery, tab, lead, length, height, pass, through, two, open+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111834578 A (JIANGSU TAFEL POWER SYSTEM CO., LTD. et al.) 27 October 2020 (2020-10-27) description, paragraphs 28-42, and figures 1-9 | 1-10, 12-20 |
| X | CN 111834578 A (JIANGSU TAFEL POWER SYSTEM CO., LTD. et al.) 27 October 2020 (2020-10-27) description, paragraphs 28-42, and figures 1-9 | 11 |
| Y | CN 114614171 A (ZHEJIANG ZEEKR INTELLIGENT TECHNOLOGY CO., LTD. et al.) 10 June 2022 (2022-06-10) description, paragraphs 38-58, and figures 1-5 | 11 |
| Y | CN 112310517 A (CONTEMPORARY AMPEREX TECHNOLOGY CO., LTD.) 02 February 2021 (2021-02-02) description, paragraphs 63-115, and figures 1-10 | 1-20 |
| Y | CN 211182402 U (DESTEN QINGDAO HIGH-TECH INDUSTRIAL PARK CO., LTD.) 04 August 2020 (2020-08-04) description, paragraphs 23-39, and figures 1-2 | 1-20 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 November 2022** | **30 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/107122**

### C.    DOCUMENTS CONSIDERED TO BE RELEVANT

| Category* | Citation of document, with indication, where appropriate, of the relevant passages | Relevant to claim No. |
|---|---|---|
| Y | CN 216389652 U (DO-FLUORIDE NEW ENERGY TECHNOLOGY CO., LTD.) 26 April 2022 (2022-04-26) <br> description, paragraphs 33-54, and figures 1-2 | 1-20 |
| Y | CN 208799783 U (LG CHEM LTD.) 30 April 2019 (2019-04-30) <br> description, paragraphs 38-48, and figures 1-5 | 1-20 |
| A | CN 216903213 U (CONTEMPORARY AMPEREX TECHNOLOGY CO., LTD.) 05 July 2022 (2022-07-05) <br> entire document | 1-20 |
| A | CN 113764788 A (BYD CO., LTD.) 07 December 2021 (2021-12-07) <br> entire document | 1-20 |

Form PCT/ISA/210 (second sheet) (January 2015)

INTERNATIONAL SEARCH REPORT
Information on patent family members

International application No.

**PCT/CN2022/107122**

| Patent document cited in search report | | | Publication date (day/month/year) | Patent family member(s) | | | Publication date (day/month/year) |
|---|---|---|---|---|---|---|---|
| CN | 111834578 | A | 27 October 2020 | CN | 212517369 | U | 09 February 2021 |
| | | | | WO | 2022036836 | A1 | 24 February 2022 |
| | | | | WO | 2022037091 | A1 | 24 February 2022 |
| CN | 114614171 | A | 10 June 2022 | None | | | |
| CN | 112310517 | A | 02 February 2021 | CN | 210743996 | U | 12 June 2020 |
| | | | | WO | 2021073200 | A1 | 22 April 2021 |
| | | | | EP | 3836297 | A1 | 16 June 2021 |
| | | | | EP | 3836297 | A4 | 29 September 2021 |
| | | | | KR | 20220060545 | A | 11 May 2022 |
| CN | 211182402 | U | 04 August 2020 | None | | | |
| CN | 216389652 | U | 26 April 2022 | None | | | |
| CN | 208799783 | U | 30 April 2019 | WO | 2017039143 | A1 | 09 March 2017 |
| | | | | KR | 20170027544 | A | 10 March 2017 |
| | | | | KR | 101900999 | B1 | 20 September 2018 |
| CN | 216903213 | U | 05 July 2022 | None | | | |
| CN | 113764788 | A | 07 December 2021 | WO | 2021233043 | A1 | 25 November 2021 |

Form PCT/ISA/210 (patent family annex) (January 2015)